# EUROPEAN PATENT APPLICATION

(11) **EP 4 632 236 A1**
(43) Date of publication of application: **15.10.2025**
(21) Application number: 24777529.9
(22) Date of filing: 05.02.2024
(51) Int. Cl.: F15B 21/08

(54) **HYDRAULIC CONTROL SYSTEM FOR DEDICATED HYBRID TRANSMISSION, CONTROL METHOD, AND AUTOMOBILE**

(30) Priority: 31.03.2023 CN 202310340495
(71) Applicant: Chongqing Changan Automobile Co., Ltd., Chongqing 400023 (CN)
(72) Inventor: LIU, Feigang, Chongqing 400023 (CN); ZHANG, Jie, Chongqing 400023 (CN); ZHAO, Zongqin, Chongqing 400023 (CN); HUANG, Congying, Chongqing 400023 (CN)
(74) Representative: Keller Schneider Patent- und Markenanwälte AG
(86) International application number: PCT/CN2024/076138
(87) International publication number: WO 2024/198735

(57) **Abstract**

Disclosed is a hydraulic control system, comprising: an oil tank (31) and an oil pump (33) communicated with the oil tank (31); a single clutch arranged between a generator and a drive motor of a hybrid electric vehicle, the single clutch being provided with a clutch lubricating oil path (51) and a clutch pressure oil path; switching solenoid valves, one oil inlet of each switching solenoid valve being communicated with the oil tank (31), and the other oil inlet being communicated with the oil pump (33); switching mechanical valves, one oil inlet of each switching mechanical valve being communicated with the oil tank (31), the other oil inlet being communicated with the oil pump (33), and an oil outlet of the switching mechanical valve being communicated with the clutch pressure oil path; and a main pressure regulating mechanical valve (34), an oil inlet of the main pressure regulating mechanical valve (34) being communicated with the oil pump (33), an oil outlet of the main pressure regulating mechanical valve (34) being communicated with the clutch lubricating oil path (51), and a feedback end of the main pressure regulating mechanical valve (34) being communicated with the oil pump (33), wherein an oil outlet of each switching solenoid valve is communicated with a control end of each switching mechanical valve and a control end of the main pressure regulating mechanical valve, so that the structure is further simplified, and the cost is further reduced. Further disclosed are a control method using the hydraulic control system and a vehicle.

## Description

### TECHNICAL FIELD

The present application belongs to the technical field of transmissions for hybrid electric vehicles, and particularly relates to a hydraulic control system for a dedicated hybrid transmission, a control method and a vehicle.

### BACKGROUND

With the annual tightening of national regulations on vehicle fuel consumption and the vehicle use cost for users, hybrid electric vehicles have gained higher and higher public recognition due to their low fuel consumption. A hybrid system of a hybrid electric vehicle includes parts such as a generator, a driving motor, a clutch, a shaft gear and a hydraulic system. The generator is connected to an engine, and the engine consumes fuel to generate electricity which is stored in a power battery. The driving motor is connected to a differential, and the vehicle is directly driven by connecting the differential to wheels through a driving shaft. There is a clutch structure between the generator and the driving motor, which enables the connection between the generator and the driving motor, i.e., the engine directly drives the vehicle.

Main working modes of a dedicated hybrid transmission include: a serial mode, where when the power battery has enough electric quantity, the driving motor consumes energy of the power battery to drive the vehicle; when the power battery has insufficient electric quantity, the engine drives the generator, the electric quantity is stored in the power battery, and the driving motor consumes energy of the power battery to drive the vehicle; and at this time, the hydraulic system provides lubrication and cooling flow for the generator, the driving motor and a shaft system; and a parallel mode, where the clutch is engaged, the engine and the generator are connected to the driving motor, and at this time, the engine can directly drive the vehicle, or the driving motor and the engine can drive the vehicle together; and at this time, the hydraulic system provides lubrication and cooling flow for the generator, the driving motor, the shaft system and the clutch, and at the same time, the clutch is required to be engaged.

In the prior art, in the patent literature (CN 213920655 U, Hybrid vehicle and hydraulic system, gearbox and power system thereof/CN 107054056 B, Hybrid vehicle), in a hydraulic system, two switching electromagnetic valves are used to control one clutch. A hydraulic system in the patent literature (CN 213920655 U, Hybrid vehicle and hydraulic system, gearbox and power system thereof) uses three linear valves to control one clutch and one lubrication line. In the above prior art, a large number of electromagnetic valves are used, such that the cost is high.

### SUMMARY OF THE INVENTION

The present application aims to provide a hydraulic control system for a dedicated hybrid transmission, which is low in cost and simple in structure, a control method and a vehicle.

A technical solution of the present application is:
The present application provides a hydraulic control system for a dedicated hybrid transmission, including:
a controller;
an oil tank and an oil pump in communication with the oil tank;
a single clutch arranged between a generator and a driving motor of a hybrid electric vehicle, wherein the single clutch has a clutch lubricating oil line and a clutch pressure oil line;
a switching electromagnetic valve, having two oil inlets and one oil outlet, wherein one of the oil inlets of the switching electromagnetic valve is in communication with the oil tank, and the other oil inlet thereof is in communication with the oil pump;
a switchover mechanical valve, having two oil inlets and one oil outlet, wherein one of the oil inlets of the switchover mechanical valve is in communication with the oil tank, the other oil inlet thereof is in communication with the oil pump, and the oil outlet of the switchover mechanical valve is in communication with the clutch pressure oil line; and
a main pressure regulating mechanical valve, having one oil inlet and one oil outlet, wherein the oil inlet of the main pressure regulating mechanical valve is in communication with the oil pump, the oil outlet of the main pressure regulating mechanical valve is in communication with the clutch lubricating oil line, and a feedback end of the main pressure regulating mechanical valve is in communication with the oil pump; wherein
the oil outlet of the switching electromagnetic valve is in communication with both a control end of the switchover mechanical valve and a control end of the main pressure regulating mechanical valve; and the controller is configured to regulate an oil supply pressure introduced into the clutch pressure oil line by controlling the switching electromagnetic valve so as to control engagement or disengagement of the single clutch.

Optionally, the hydraulic control system further includes:
a main pressure switchover mechanical valve, having two oil inlets and one oil outlet, wherein one of the oil inlets of the main pressure switchover mechanical valve is in communication with the oil tank, and the other oil inlet thereof is in communication with the oil pump; wherein
the oil outlet of the main pressure switchover mechanical valve is in communication with the control end of the main pressure regulating mechanical valve, and a control end of the main pressure switchover mechanical valve is in communication with the oil outlet of the switching electromagnetic valve, so as to achieve indirect communication between the control end of the main pressure regulating mechanical valve and the oil outlet of the switching electromagnetic valve.

Optionally, the hydraulic control system further includes:
an energy accumulator in communication with an oil path between the switchover mechanical valve and the clutch pressure oil line.

Optionally, a damping hole is arranged on an oil path between the switchover mechanical valve and the oil pump.

The present application provides a hydraulic control system for a dedicated hybrid transmission, and the hydraulic control system includes:
a controller;
an oil tank and an oil pump in communication with the oil tank;
a dual clutch arranged between a generator and a driving motor of a hybrid electric vehicle, wherein the dual clutch has a clutch lubricating oil line and two clutch pressure oil lines;
two switching electromagnetic valves, wherein each switching electromagnetic valve has two oil inlets and one oil outlet; and one of the oil inlets of each switching electromagnetic valve is in communication with the oil tank, and the other oil inlet thereof is in communication with the oil pump;
two switchover mechanical valves, wherein each switchover mechanical valve has two oil inlets and one oil outlet, one of the oil inlets of each switchover mechanical valve is in communication with the oil tank, the other oil inlet thereof is in communication with the oil pump, and the oil outlet of each switchover mechanical valve is in communication with one of the two clutch pressure oil lines;
a main pressure regulating mechanical valve, having one oil inlet and one oil outlet, wherein the oil inlet of the main pressure regulating mechanical valve is in communication with the oil pump, the oil outlet of the main pressure regulating mechanical valve is in communication with the clutch lubricating oil line, and a feedback end of the main pressure regulating mechanical valve is in communication with the oil pump; and
a main pressure switchover mechanical valve, having two oil inlets, one oil outlet and two control ends, wherein one of the oil inlets of the main pressure switchover mechanical valve is in communication with the oil tank, the other oil inlet thereof is in communication with the oil pump, and the oil outlet of the main pressure switchover mechanical valve is in communication with a control end of the main pressure regulating mechanical valve; wherein
the oil outlet of each switching electromagnetic valve is in communication with a control end of one of the two switchover mechanical valves and is also in communication with one of the two control ends of the main pressure switchover mechanical valve; and
the controller is configured to regulate an oil supply pressure introduced into the clutch pressure oil lines by controlling each switching electromagnetic valve so as to control engagement or disengagement of the dual clutch.

Optionally, the hydraulic control system further includes:
an energy accumulator in communication with an oil path between each switchover mechanical valve and a corresponding clutch pressure oil line.

Optionally, a damping hole is arranged on an oil path between each switchover mechanical valve and the oil pump.

The present application further provides a control method of a hydraulic control system for a dedicated hybrid transmission, applied to the above hydraulic control system for the dedicated hybrid transmission, and the control method includes:
when it is determined that the hybrid electric vehicle is in a serial drive mode, controlling, by the controller, the oil outlet of the switching electromagnetic valve to be connected to the oil tank, such that a main pressure regulating mechanical valve connects the oil pump to the clutch lubricating oil line, and the switchover mechanical valve connects the clutch pressure oil line to the oil tank, thereby making the oil supply pressure introduced into the clutch pressure oil line be 0 bar, and achieving disengagement of the single clutch; and
when it is determined that the hybrid electric vehicle is in a parallel drive mode, controlling, by the controller, the oil outlet of the switching electromagnetic valve to be connected to the oil pump, such that the main pressure regulating mechanical valve connects the oil pump to the clutch lubricating oil line, and the switchover mechanical valve connects the clutch pressure oil line to the oil pump, thereby making the oil supply pressure introduced into the clutch pressure oil line be a preset high pressure, and achieving engagement of the single clutch.

The present application further provides a control method of a hydraulic control system for a dedicated hybrid transmission, applied to the above hydraulic control system for the dedicated hybrid transmission, and the control method includes:
when it is determined that the hybrid electric vehicle is in a serial drive mode, controlling, by the controller, the oil outlets of the two switching electromagnetic valves to be connected to the oil tank, such that the main pressure regulating mechanical valve connects the oil pump to the clutch lubricating oil line, and each of the two switchover mechanical valves connects a corresponding clutch pressure oil line to the oil tank, thereby making the oil supply pressure introduced into each clutch pressure oil line be 0 bar, and achieving disengagement of the dual clutch; and
when it is determined that the hybrid electric vehicle is in a parallel drive mode and a target clutch in the dual clutch needs to engage, controlling, by the controller, the oil outlet of the switching electromagnetic valve corresponding to the target clutch to be connected to the oil pump, such that the main pressure regulating mechanical valve connects the oil pump to the clutch lubricating oil line, and the switchover mechanical valve corresponding to the target clutch connects a corresponding clutch pressure oil line to the oil pump, thereby making the oil supply pressure introduced into the clutch pressure oil line corresponding to the target clutch be a preset high pressure, and achieving engagement of the target clutch; and at the same time, further controlling, by the controller, the oil outlet of the switching electromagnetic valve corresponding to the other clutch in the dual clutch to be connected to the oil tank, such that the switchover mechanical valve corresponding to the other clutch connects a corresponding clutch pressure oil line to the oil tank, thereby making the oil supply pressure introduced into the clutch pressure oil line corresponding to the other clutch be 0 bar, and achieving disengagement of the other clutch.

The present application further provides a vehicle, including the above hydraulic control system for the dedicated hybrid transmission, or including the above hydraulic control system for the dedicated hybrid transmission.

The present application has the beneficial effects:
in the present application, one switching electromagnetic valve is used to control the oil supply pressure of the clutch pressure oil line of one clutch, and two switching electromagnetic valves are used to control the oil supply pressure of the clutch pressure oil lines of two clutches, which can meet the requirements of a one-gear dedicated hybrid transmission and a two-gear dedicated hybrid transmission. Compared to a traditional hydraulic system, at least one electromagnetic valve is omitted, and thus the structure of the hydraulic system is further simplified, and the cost is further lowered.

### BRIEF DESCRIPTION OF THE DRAWINGS

FIG. 1 is a structural diagram of a hydraulic control system in which two switching electromagnetic valves control two clutches in an embodiment;
FIG. 2 is a structural diagram of a hydraulic control system in which one switching electromagnetic valve controls one clutch in an embodiment;
FIG. 3 is a structural diagram of a further simplified hydraulic control system in which one switching electromagnetic valve controls one clutch in an embodiment.

In the figures: 1-first oil line, 2-second oil line, 3-third oil line, 4-fourth oil line, 5-fifth oil line, 6-sixth oil line, 7-seventh oil line, 8-eighth oil line, 9-ninth oil line, 10-tenth oil line, 11-eleventh oil line, 12-twelfth oil line, 13-thirteenth oil line, 14-fourteenth oil line, 15-fifteenth oil line, 16-sixteenth oil line, 17-seventeenth oil line, 18-eighteenth oil line, 19-nineteenth oil line, 21-first damping hole, 22-second damping hole, 31-oil tank, 32-filter, 33-oil pump, 34-main pressure regulating mechanical valve, 35-main pressure switchover mechanical valve, 351-first control end of main pressure switchover mechanical valve, 352-second control end of main pressure switchover mechanical valve, 36-first switching electromagnetic valve, 37-second switching electromagnetic valve, 38-first switchover mechanical valve, 39-second switchover mechanical valve, 40-first energy accumulator, 41-second energy accumulator, 51-clutch cooling and lubricating oil line, 52-first clutch pressure oil line, and 53-second clutch pressure oil line.

### DETAILED DESCRIPTION

The present application is further described below in conjunction with the accompanying drawings.

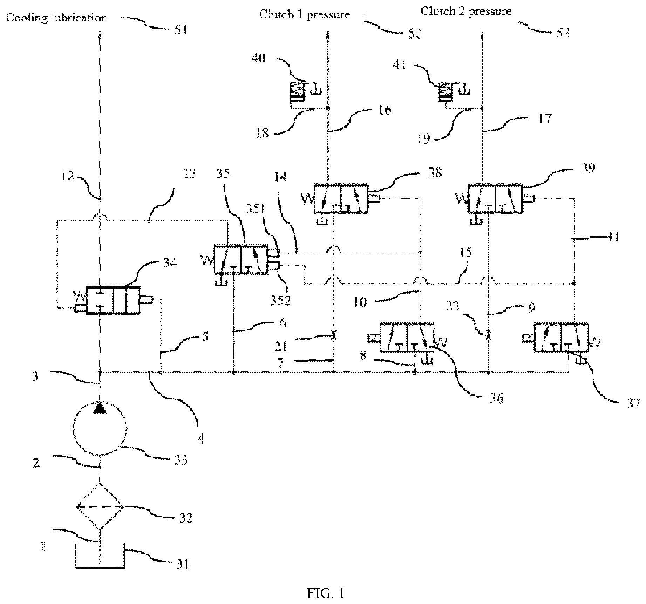

As shown in FIG. 1, an embodiment provides a hydraulic control system for a dedicated hybrid transmission, and the hydraulic control system includes:
a controller;
an oil tank 31 and an oil pump 33 in communication with the oil tank;
a dual clutch arranged between a generator and a driving motor of a hybrid electric vehicle, wherein the dual clutch has a clutch lubricating oil line 51 (corresponding to cooling and lubricating in FIG. 1) and two clutch pressure oil lines (corresponding to a first clutch pressure oil line 52 and a second clutch pressure oil line 53, wherein the first clutch pressure oil line 52 specifically corresponds to pressure of clutch 1 in FIG. 1, and the second clutch pressure oil line 53 specifically corresponds to pressure of clutch 2);
two switching electromagnetic valves (corresponding to a first switching electromagnetic valve 36 and a second switching electromagnetic valve 37), wherein each switching electromagnetic valve has two oil inlets and one oil outlet; and one of the oil inlets of each switching electromagnetic valve is in communication with the oil tank 31, and the other oil inlet thereof is in communication with the oil pump 33;
two switchover mechanical valves (corresponding to a first switchover mechanical valve 38 and a second switchover mechanical valve 39), wherein each switchover mechanical valve has two oil inlets and one oil outlet, one of the oil inlets of each switchover mechanical valve is in communication with the oil tank 31, the other oil inlet thereof is in communication with the oil pump 33 (seen from FIG. 1, one of the oil inlets of the first switchover mechanical valve 38 is in communication with the oil tank 31, and the other oil inlet thereof is in communication with the oil pump 33; and similarly, one of the oil inlets of the second switchover mechanical valve 39 is in communication with the oil tank 31, and the other oil inlet thereof is in communication with the oil pump 33), and the oil outlet of each switchover mechanical valve is in communication with one of the two clutch pressure oil lines (specifically speaking, the oil outlet of the first switchover mechanical valve 38 is in communication with the first clutch pressure oil line 52, and the oil outlet of the second switchover mechanical valve 39 is in communication with the second clutch pressure oil line 53); a main pressure regulating mechanical valve 34, having one oil inlet and one oil outlet, wherein the oil inlet of the main pressure regulating mechanical valve 34 is in communication with the oil pump 33, the oil outlet of the main pressure regulating mechanical valve 34 is in communication with the clutch lubricating oil line 51, and a feedback end of the main pressure regulating mechanical valve 34 is in communication with the oil pump 33; and
a main pressure switchover mechanical valve 35, having two oil inlets, one oil outlet and two control ends, wherein one of the oil inlets of the main pressure switchover mechanical valve 35 is in communication with the oil tank 31, the other oil inlet thereof is in communication with the oil pump 33, and the oil outlet of the main pressure switchover mechanical valve 35 is in communication with a control end of the main pressure regulating mechanical valve 34.

The oil outlet of each switching electromagnetic valve is in communication with a control end of one of the two switchover mechanical valves and is also in communication with one of the two control ends of the main pressure switchover mechanical valve 35 (that is, the oil outlet of the first switching electromagnetic valve 36 is in communication with a control end of the first switchover mechanical valve 38 and is also in communication with a first control end 351 of the main pressure switchover mechanical valve 35, and the oil outlet of the second switching electromagnetic valve 37 is in communication with the second switchover mechanical valve 39 and is also in communication a second control end 352 of the main pressure switchover mechanical valve 35).

The controller is configured to regulate an oil supply pressure introduced into the clutch pressure oil lines by controlling each switching electromagnetic valve so as to control engagement or disengagement of the dual clutch. A specific control principle of the controller for each switching electromagnetic valve is that:
when it is determined that the hybrid electric vehicle is in a serial drive mode, the controller controls the oil outlets of the two switching electromagnetic valves to be connected to the oil tank 31, such that the main pressure regulating mechanical valve connects the oil pump 33 to the clutch lubricating oil line 51, and the two switchover mechanical valves connect a corresponding clutch pressure oil line to the oil tank 31, thereby making the oil supply pressure introduced into each clutch pressure oil line be 0 bar, and achieving disengagement of the dual clutch; and
when it is determined that the hybrid electric vehicle is in a parallel drive mode and a target clutch in the dual clutch needs to engage, the controller controls the oil outlet of the switching electromagnetic valve corresponding to the target clutch to be connected to the oil pump 33, such that the main pressure regulating mechanical valve 34 connects the oil pump 33 to the clutch lubricating oil line 51, and the switchover mechanical valve corresponding to the target clutch connects a corresponding clutch pressure oil line to the oil pump 33, thereby making the oil supply pressure introduced into the clutch pressure oil line corresponding to the target clutch be a preset high pressure, and achieving engagement of the target clutch; and at the same time, the controller further controls the oil outlet of the switching electromagnetic valve corresponding to the other clutch in the dual clutch to be connected to the oil tank 31, such that the switchover mechanical valve corresponding to the other clutch connects a corresponding clutch pressure oil line to the oil tank 31, thereby making the oil supply pressure introduced into the clutch pressure oil line corresponding to the other clutch be 0 bar, and achieving disengagement of the other clutch.

Specifically speaking, as shown in FIG. 1, the hydraulic control system in the present embodiment includes a first oil line 1, a second oil line 2, a third oil line 3, a fourth oil line 4, a fifth oil line 5, a sixth oil line 6, a seventh oil line 7, an eighth oil line 8, a ninth oil line 9, a tenth oil line 10, an eleventh oil line 11, a twelfth oil line 12, a thirteenth oil line 13, a fourteenth oil line 14, a fifteenth oil line 15, a sixteenth oil line 16, a seventeenth oil line 17, an eighteenth oil line 18, a nineteenth oil line 19, a first damping hole 21, a second damping hole 22, the oil tank 31, a filter 32, the oil pump 33, the main pressure regulating mechanical valve 34, the main pressure switchover mechanical valve 35, the first control end 351 of the main pressure switchover mechanical valve, the second control end 352 of the main pressure switchover mechanical valve, the first switching electromagnetic valve 36, the second switching electromagnetic valve 37, the first switchover mechanical valve 38, the second switchover mechanical valve 39, a first energy accumulator 40, a second energy accumulator 41, the clutch cooling and lubricating oil line 51, the first clutch pressure oil line 52 and the second clutch pressure oil line 53.

A connection relationship between the above parts is as follows:
As shown in FIG. 1, the filter 32 is in communication with the oil tank 31 through the first oil line 1, and an oil inlet of the oil pump 33 is in communication with the filter 32 through the second oil line 2. The oil inlet of the main pressure regulating mechanical valve 34 is in communication with an outlet of the oil pump 33 through the third oil line 3, and the third oil line 3 is in communication with the fourth oil line 4, the fifth oil line 5, the sixth oil line 6, the seventh oil line 7, the eighth oil line 8 and the ninth oil line 9. A right feedback end of the main pressure regulating mechanical valve 34 is in communication with the fifth oil line 5, a left control end of the main pressure regulating mechanical valve 34 is in communication with the oil outlet of the main pressure switchover mechanical valve 35 through the thirteenth oil line 13, the oil outlet of the main pressure regulating mechanical valve 34 is in communication with the twelfth oil line 12, and the twelfth oil line 12 is in communication with the clutch lubricating oil line 51. The oil inlet of the main pressure switchover mechanical valve 35 is in communication with the fourth oil line 4 through the sixth oil line 6, the first control end 351 of the main pressure switchover mechanical valve 35 is in communication with the tenth oil line 10 through the fourteenth oil line 14, the second control end 352 of the main pressure switchover mechanical valve 35 is in communication with the eleventh oil line 11 through the fifteenth oil line 15, and the first control end 351 of the main pressure switchover mechanical valve 35 is not in communication with the second control end 352 of the main pressure switchover mechanical valve 35. The oil inlet of the first switching electromagnetic valve 36 is in communication with the fourth oil line 4 through the eighth oil line 8, and the oil outlet of the first switching electromagnetic valve 36 is in communication with a right control end of the first switchover mechanical valve 38 through the tenth oil line 10. The oil inlet of the first switchover mechanical valve 38 is in communication with the fourth oil line 4 through the seventh oil line 7, the first damping hole 21 is arranged in the seventh oil line 7, the oil outlet of the first switchover mechanical valve 38 is in communication with the sixteenth oil line 16, the sixteenth oil line 16 is in communication with the first energy accumulator 40 through the eighteenth oil line 18, and the sixteenth oil line 16 is in communication with the first clutch pressure oil line 52. The oil inlet of the second switching electromagnetic valve 37 is in communication with the fourth oil line 4, and the oil outlet of the second switching electromagnetic valve 37 is in communication with a right control end of the second switchover mechanical valve 39 through the eleventh oil line 11. The oil inlet of the second switchover mechanical valve 39 is in communication with the fourth oil line 4 through the ninth oil line 9, the second damping hole 22 is arranged in the ninth oil line 9, the oil outlet of the second switchover mechanical valve 39 is in communication with the seventeenth oil line 17, the seventeenth oil line 17 is in communication with the second energy accumulator 41 through the nineteenth oil line 19, and the seventeenth oil line 17 is in communication with the second clutch pressure oil line 53.

In the present embodiment, the main pressure regulating mechanical valve 34 is a two-position two-way mechanical valve, when the main pressure regulating mechanical valve 34 is located at a left end working position, the third oil line 3 and the twelfth oil line 12 are disconnected, and when the main pressure regulating mechanical valve 34 is located at a right end working position, the third oil line 3 is in communication with the twelfth oil line 12.

In the present embodiment, the main pressure switchover mechanical valve 35 is a two-position three-way mechanical valve, when the main pressure switchover mechanical valve 35 is located at a left end working position, the thirteenth oil line 13 is in communication with the oil tank 31, and the thirteenth oil line 13 and the sixth oil line 6 are disconnected, and when the main pressure switchover mechanical valve 35 is located at a right end working position, the thirteenth oil line 13 and the oil tank 31 are disconnected, and the thirteenth oil line 13 is in communication with the sixth oil line 6.

In the present embodiment, the first switching electromagnetic valve 36 and the second switching electromagnetic valve 37 are both two-position three-way switching electromagnetic valves, when the first switching electromagnetic valve 36 is not powered, the first switching electromagnetic valve 36 is located at a right end working position, and at the moment, the tenth oil line 10 is in communication with the oil tank 31, and the tenth oil line 10 is disconnected from the eighth oil line 8 and the fourth oil line 4. When the first switching electromagnetic valve 36 is powered, the first switching electromagnetic valve 36 is located at a left end working position, and at the moment, the tenth oil line 10 and the oil tank 31 are disconnected, and the tenth oil line 10 is in communication with the eighth oil line 8 and the fourth oil line 4. When the second switching electromagnetic valve 37 is not powered, the second switching electromagnetic valve 37 is located at a right end working position, and at the moment, the eleventh oil line 11 is in communication with the oil tank 31, and the eleventh oil line 11 and the fourth oil line 4 are disconnected. When the second switching electromagnetic valve 37 is powered, the second switching electromagnetic valve 37 is located at a left end working position, and at the moment, the eleventh oil line 11 and the oil tank 31 are disconnected, and the eleventh oil line 11 is in communication with the fourth oil line 4.

In the present embodiment, the first switchover mechanical valve 38 is a two-position three-way mechanical valve, when the first switchover mechanical valve 38 is located at a left end working position, the sixteenth oil line 16 is in communication with the oil tank 31, and the sixteenth oil line 16 and the seventh oil line 7 are disconnected, and when the first switchover mechanical valve 38 is located at a right end working position, the sixteenth oil line 16 and the oil tank 31 are disconnected, and the sixteenth oil line 16 is in communication with the seventh oil line 7.

In the present embodiment, the second switchover mechanical valve 39 is a two-position three-way mechanical valve, when the second switchover mechanical valve 39 is located at a left end working position, the seventeenth oil line 17 is in communication with the oil tank 31, and the seventeenth oil line 17 and the ninth oil line 9 are disconnected, and when the second switchover mechanical valve 39 is located at a right end working position, the seventeenth oil line 17 and the oil tank 31 are disconnected, and the seventeenth oil line 17 is in communication with the ninth oil line 9.

In the present embodiment, the oil pump 33 may be driven by the driving motor, or driven by an engine or the generator, or driven by an independent motor.

A working process of the present embodiment is as follows:
As shown in FIG. 1, it is a structural diagram of a hybrid hydraulic control system in which two switching electromagnetic valves control two clutches.

When the dedicated hybrid transmission is in a serial mode, the clutches are disengaged, the oil pump 33 works, and operating oil in the oil tank 31 enters an inlet of the oil pump 33 via the first oil line 1 and the filter 32. Operating oil at an outlet of the oil pump 33 enters the right feedback end of the main pressure regulating mechanical valve 34 through the third oil line 3, the fourth oil line 4 and the fifth oil line 5, the operating oil at the outlet of the oil pump 33 enters the inlets of the first switching electromagnetic valve 36 and the second switching electromagnetic valve 37 through the third oil line 3, the fourth oil line 4 and the eighth oil line 8, the first switching electromagnetic valve 36 and the second switching electromagnetic valve 37 are not powered, the first switching electromagnetic valve 36 and the second switching electromagnetic valve 37 are both located at the right end working positions, at the moment, the tenth oil line 10 and the fourteenth oil line 14 are in communication with the oil tank 31, the tenth oil line 10 and the fourteenth oil line 14 are disconnected from the eighth oil line 8 and the fourth oil line 4, control oil returns to the oil tank 31 through the first switching electromagnetic valve 36 and the second switching electromagnetic valve 37, the eleventh oil line 11 and the fifteenth oil line 15 are in communication with the oil tank 31, and the eleventh oil line 11 and the fifteenth oil line 15 are disconnected from the fourth oil line 4. At the moment, pressures in the tenth oil line 10, the fourteenth oil line 14, the eleventh oil line 11 and the fifteenth oil line 15 are 0 bar. The first switchover mechanical valve 38 is made to be located at the left end working position under the spring action of the first switchover mechanical valve 38, at the moment, the sixteenth oil line 16 and the first clutch pressure oil line 52 are in communication with the oil tank 31, a pressure in the first clutch pressure oil line 52 is 0 bar, and the first clutch pressure oil line 52 is disconnected. The second switchover mechanical valve 39 is made to be located at the left end working position under the spring action of the second switchover mechanical valve 39, at the moment, the seventeenth oil line 17 and the second clutch pressure oil line 53 are in communication with the oil tank 31, a pressure in the second clutch pressure oil line 53 is 0 bar, and the second clutch pressure oil line 53 is disconnected. The main pressure switchover mechanical valve 35 is made to be located at the left end working position under the spring action of the main pressure switchover mechanical valve 35, at the moment, the thirteenth oil line 13 is in communication with the oil tank 31, and the thirteenth oil line 13 is disconnected from the sixth oil line 6. At the moment, a pressure in the thirteenth oil line 13 is 0 bar, a pressure at the right feedback end of the main pressure regulating mechanical valve 34 and spring force of the main pressure regulating mechanical valve 34 are balanced, the main pressure regulating mechanical valve 34 is located at the right end working position, the third oil line 3 is in communication with the twelfth oil line 12, and a pressure of operating oil in the third oil line 3, the fourth oil line 4, the fifth oil line 5, the sixth oil line 6, the seventh oil line 7, the eighth oil line 8 and the ninth oil line 9 is maintained at a low pressure value, such as a typical design value of 2.5 bar. In this state, pressures in the first clutch pressure oil line 52 and the second clutch pressure oil line 53 are 0 bar, the first clutch pressure oil line 52 and the second clutch pressure oil line 53 are both disconnected, and the oil pump 33 provides flow for the clutch lubricating oil line 51.

With pressure control of the first clutch pressure oil line 52, when the dedicated hybrid transmission receives a request of entering parallel connection and the first clutch pressure oil line 52 is required to be engaged, the second switching electromagnetic valve 37 is not powered, the second switching electromagnetic valve 37 is located at the right end working position, at the moment, the eleventh oil line 11 and the fifteenth oil line 15 are in communication with the oil tank 31, a pressure in the eleventh oil line 11 is 0 bar, the second switchover mechanical valve 39 is made to be located at the left end working position under the spring action of the second switchover mechanical valve 39, at the moment, the seventeenth oil line 17 and the second clutch pressure oil line 53 are in communication with the oil tank 31, and a pressure in the second clutch pressure oil line 53 is 0 bar. The first switching electromagnetic valve 36 is powered, the first switching electromagnetic valve 36 is located at the left end working position, at the moment, the tenth oil line 10 is disconnected from the oil tank 31, the tenth oil line 10 and the fourteenth oil line 14 are in communication with the eighth oil line 8 and the fourth oil line 4, operating oil at the outlet of the mechanical oil pump 33 enters the first control end 351 of the main pressure switchover mechanical valve and the right control end of the first switchover mechanical valve 38 through the third oil line 3, the fourth oil line 4, the eighth oil line 8, the tenth oil line 10 and the fourteenth oil line 14, at the moment, pressures in the fourteenth oil line 14 and the tenth oil line 10 are 2.5 bar, which are greater than spring force of the main pressure switchover mechanical valve 35 and the first switchover mechanical valve 38, the main pressure switchover mechanical valve 35 and the first switchover mechanical valve 38 are both located at the right end working positions, and at the moment, the thirteenth oil line 13 is in communication with the sixth oil line 6, and the seventh oil line 7 is in communication with the sixteenth oil line 16. Therefore, a pressure at the left control end of the main pressure regulating mechanical valve 34 and spring force of the main pressure regulating mechanical valve 34 are balanced with a pressure at the right feedback end thereof, by setting an acting area of the left control end of the main pressure regulating mechanical valve 34 to be smaller than an acting area of the right feedback end of the main pressure regulating mechanical valve 34, the working position of the main pressure regulating mechanical valve 34 is located at the right position, the third oil line 3 is in communication with the twelfth oil line 12, and a pressure of operating oil in the third oil line 3, the fourth oil line 4, the fifth oil line 5, the sixth oil line 6, the seventh oil line 7, the eighth oil line 8 and the ninth oil line 9 is regulated to be a high pressure value, such as a typical design value of 10 bar. At the same time, the seventh oil line 7 is in communication with the sixteenth oil line 16, so as to be in communication with the first clutch pressure oil line 52, operating oil starts to enter the first clutch pressure oil line 52, the first damping hole 21 is arranged in the seventh oil line 7 and used for controlling oil charging flow of the first clutch pressure oil line 52, the first energy accumulator 40 is arranged to be in communication with the first clutch pressure oil line 52 through the eighteenth oil line 18 and the sixteenth oil line 16, pressure impact on the clutches is effectively lowered, the pressure in the first clutch pressure oil line 52 reaches the target 10 bar after certain time, and the first clutch pressure oil line 52 is engaged. Therefore, the first switching electromagnetic valve 36 is controlled to open and close so as to control the pressure of the operating oil in the third oil line 3, the fourth oil line 4, the fifth oil line 5, the sixth oil line 6, the seventh oil line 7, the eighth oil line 8, the ninth oil line 9 and the first clutch pressure oil line 52. In this state, the pressure in the first clutch pressure oil line 52 is 10 bar, and the first clutch pressure oil line 52 is in an engaged state. The oil pump 33 provides a pressure for the first clutch pressure oil line 52, and provides flow for the clutch lubricating oil line 51.

With pressure control of the second clutch pressure oil line 53, when the dedicated hybrid transmission receives a request of entering parallel connection and the second clutch pressure oil line 53 is required to be engaged, the first switching electromagnetic valve 36 is not powered, the first switching electromagnetic valve 36 is located at the right end working position, at the moment, the tenth oil line 10 and the fourteenth oil line 14 are in communication with the oil tank 31, a pressure in the tenth oil line 10 is 0 bar, the first switchover mechanical valve 38 is made to be located at the left end working position under the spring action of the first switchover mechanical valve 38, at the moment, the sixteenth oil line 16 and the first clutch pressure oil line 52 are in communication with the oil tank 31, and a pressure in the first clutch pressure oil line 52 is 0 bar. The second switching electromagnetic valve 37 is powered, the second switching electromagnetic valve 37 is located at the left end working position, at the moment, the eleventh oil line 11 is disconnected from the oil tank 31, the eleventh oil line 11 and the fifteenth oil line 15 are in communication with the fourth oil line 4, operating oil at the outlet of the mechanical oil pump 33 enters the second control end 352 of the main pressure switchover mechanical valve and the control end of the second switchover mechanical valve 39 through the third oil line 3, the fourth oil line 4, the eleventh oil line 11 and the fifteenth oil line 15, at the moment, pressures in the fifteenth oil line 15 and the eleventh oil line 11 are 2.5 bar, which are greater than spring force of the main pressure switchover mechanical valve 35 and the second switchover mechanical valve 39, the main pressure switchover mechanical valve 35 and the second switchover mechanical valve 39 are both located at the right end working positions, and at the moment, the thirteenth oil line 13 is in communication with the sixth oil line 6, and the ninth oil line 9 is in communication with the seventeenth oil line 17. Therefore, a pressure at the left control end of the main pressure regulating mechanical valve 34 and spring force of the main pressure regulating mechanical valve 34 are balanced with a pressure at the right feedback end thereof, by setting an acting area of the left control end of the main pressure regulating mechanical valve 34 to be smaller than an acting area of the right feedback end of the main pressure regulating mechanical valve 34, the working position of the main pressure regulating mechanical valve 34 is located at the right position, the third oil line 3 is in communication with the twelfth oil line 12, and a pressure of operating oil in the third oil line 3, the fourth oil line 4, the fifth oil line 5, the sixth oil line 6, the seventh oil line 7, the eighth oil line 8 and the ninth oil line 9 is regulated to be a high pressure value, such as a typical design value of 10 bar. At the same time, the ninth oil line 9 is in communication with the seventeenth oil line 17, so as to be in communication with the second clutch pressure oil line 53, operating oil starts to enter the second clutch pressure oil line 53, the second damping hole 22 is arranged in the ninth oil line 9 and used for controlling oil charging flow of the second clutch pressure oil line 53, the second energy accumulator 41 is arranged to be in communication with the second clutch pressure oil line 53 through the nineteenth oil line 19 and the seventeenth oil line 17, pressure impact on the clutches is effectively lowered, the pressure in the second clutch pressure oil line 53 reaches the target 10 bar after certain time, and the second clutch pressure oil line 53 is engaged. Therefore, the second switching electromagnetic valve 37 is controlled to open and close so as to control the pressure of the operating oil in the third oil line 3, the fourth oil line 4, the fifth oil line 5, the sixth oil line 6, the seventh oil line 7, the eighth oil line 8, the ninth oil line 9 and the second clutch pressure oil line 53. In this state, the pressure in the second clutch pressure oil line 53 is 10 bar, and the second clutch pressure oil line 53 is in an engaged state. The oil pump 33 provides a pressure for the second clutch pressure oil line 53, and provides flow for the clutch lubricating oil line 51.

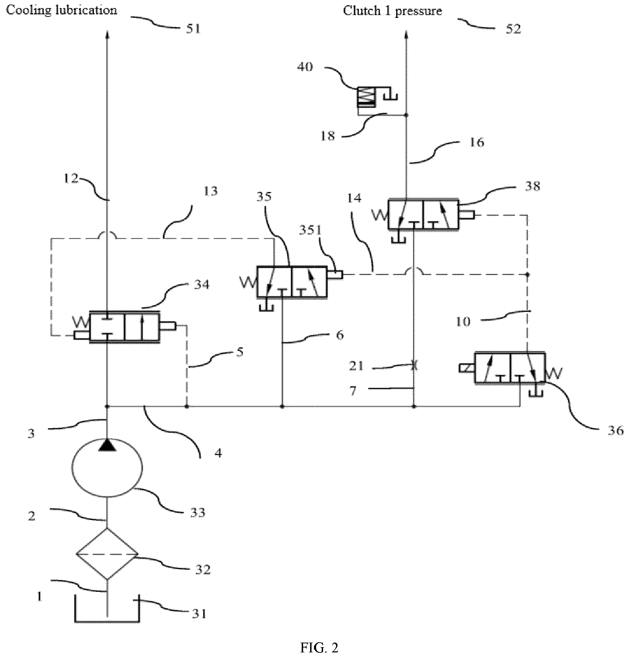

As shown in FIG. 2, it is a structural diagram of a hybrid hydraulic control system in which one switching electromagnetic valve controls one clutch. Since the quantity of clutches controlled by the system is reduced, compared to the first set of structure (as shown in FIG. 1), in the second set of structure (as shown in FIG. 2), an eighth oil line 8, a ninth oil line 9, an eleventh oil line 11, a fifteenth oil line 15, a seventeenth oil line 17, a nineteenth oil line 19, a second damping hole 22, a second switching electromagnetic valve 37, a second switchover mechanical valve 39, a second energy accumulator 41, a second clutch pressure oil line 53, and a second control end 352 of a main pressure switchover mechanical valve are omitted, additionally, an oil inlet of a first switching electromagnetic valve 36 directly is in communication with a fourth oil line 4, and a connection relationship of other parts is the same as that of the first set of structure (as shown in FIG. 1).

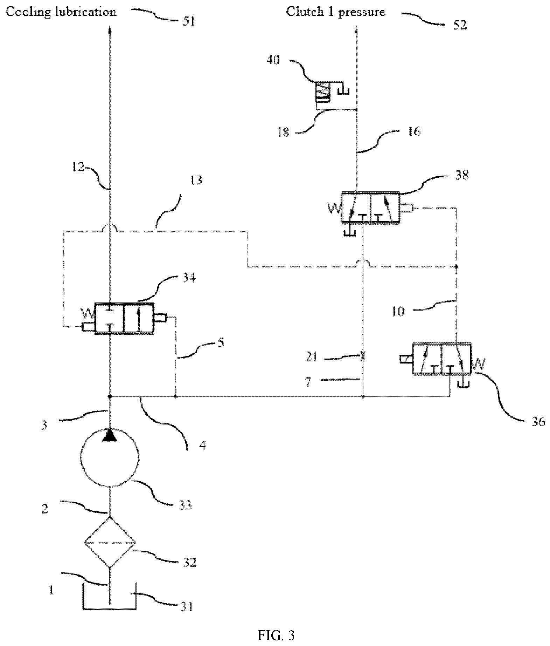

As shown in FIG. 3, it is a structural diagram of a further simplified hybrid hydraulic control system in which one switching electromagnetic valve controls one clutch. Compared to the second set of structure (as shown in FIG. 2), in the third set of structure (as shown in FIG. 3), a main pressure switchover mechanical valve 35, a first control end 351 of the main pressure switchover mechanical valve, a sixth oil line 6 and a fourteenth oil line 14 are omitted, additionally, a thirteenth oil line 13 is in communication with a tenth oil line 10, and a connection relationship of other parts is the same as that of the second set of structure (as shown in FIG. 2).

FIG. 2 is a structural diagram of a hybrid hydraulic control system in which one switching electromagnetic valve controls one clutch. Compared to the first set of structure (as shown in FIG. 1), in the second set of structure (as shown in FIG. 2), the quantity of clutches controlled by the system is reduced to one, the system only controls a first clutch pressure oil line 52, and a control principle and process of the second set of structure (as shown in FIG. 2) are the same as those of the first set of structure (as shown in FIG. 1). At the moment, the hydraulic control system includes: a controller; an oil tank 31 and an oil pump 33 in communication with the oil tank; a single clutch arranged between a generator and a driving motor of a hybrid electric vehicle, wherein the single clutch has a clutch lubricating oil line 51 (corresponding to cooling and lubricating in FIG. 2) and the first clutch pressure oil line 52 (corresponding to pressure of clutch 1 in FIG. 2); a first switching electromagnetic valve 36, having two oil inlets and one oil outlet, wherein one of the oil inlets of the first switching electromagnetic valve 36 is in communication with the oil tank 31, and the other oil inlet thereof is in communication with the oil pump 33; a first switchover mechanical valve 38, having two oil inlets and one oil outlet, wherein one of the oil inlets of the first switchover mechanical valve 38 is in communication with the oil tank 31, the other oil inlet thereof is in communication with the oil pump 33, and the oil outlet of the first switchover mechanical valve 38 is in communication with the clutch pressure oil line; a main pressure regulating mechanical valve 34, having one oil inlet and one oil outlet, wherein the oil inlet of the main pressure regulating mechanical valve 34 is in communication with the oil pump 33, the oil outlet of the main pressure regulating mechanical valve 34 is in communication with the clutch lubricating oil line 51, and a feedback end of the main pressure regulating mechanical valve 34 is in communication with the oil pump 33; and the oil outlet of the first switching electromagnetic valve 36 is in communication with a control end of the first switchover mechanical valve 38; and a main pressure switchover mechanical valve 35, having two oil inlets and one oil outlet, wherein one of the oil inlets of the main pressure switchover mechanical valve 35 is in communication with the oil tank 31, and the other oil inlet thereof is in communication with the oil pump 33; the oil outlet of the main pressure switchover mechanical valve 35 is in communication with a control end of the main pressure regulating mechanical valve 34, and a control end of the main pressure switchover mechanical valve 35 is in communication with the oil outlet of the first switching electromagnetic valve 36, so as to achieve indirect communication between the control end of the main pressure regulating mechanical valve 34 and the oil outlet of the first switching electromagnetic valve 36; and the controller controls the first switching electromagnetic valve 36 to regulate an oil supply pressure introduced into the first clutch pressure oil line 52, so as to control engagement or disengagement of the single clutch.

FIG. 3 is a structural diagram of a further simplified hybrid hydraulic control system in which one switching electromagnetic valve controls one clutch. Compared to the second set of structure (as shown in FIG. 2), in the third set of structure (as shown in FIG. 3), a main pressure switchover mechanical valve 35, a first control end 351 of the main pressure switchover mechanical valve, a sixth oil line 6 and a fourteenth oil line 14 are omitted, and additionally, a thirteenth oil line 13 is in communication with a tenth oil line 10. At the moment, the hydraulic control system includes: a controller; an oil tank 31 and an oil pump 33 in communication with the oil tank; a single clutch arranged between a generator and a driving motor of a hybrid electric vehicle, wherein the single clutch has a clutch lubricating oil line 51 (corresponding to cooling and lubricating in FIG. 3) and a first clutch pressure oil line 52 (corresponding to pressure of clutch 1 in FIG. 3); a first switching electromagnetic valve 36, having two oil inlets and one oil outlet, wherein one of the oil inlets of the first switching electromagnetic valve 36 is in communication with the oil tank 31, and the other oil inlet thereof is in communication with the oil pump 33; a first switchover mechanical valve 38, having two oil inlets and one oil outlet, wherein one of the oil inlets of the first switchover mechanical valve 38 is in communication with the oil tank 31, the other oil inlet thereof is in communication with the oil pump 33, and the oil outlet of the first switchover mechanical valve 38 is in communication with the clutch pressure oil line; and a main pressure regulating mechanical valve 34, having one oil inlet and one oil outlet, wherein the oil inlet of the main pressure regulating mechanical valve 34 is in communication with the oil pump 33, the oil outlet of the main pressure regulating mechanical valve 34 is in communication with the clutch lubricating oil line 51, and a feedback end of the main pressure regulating mechanical valve 34 is in communication with the oil pump 33. The oil outlet of the first switching electromagnetic valve 36 is in communication with both a control end of the first switchover mechanical valve 38 and a control end of the main pressure regulating mechanical valve 34; and the controller is configured to regulate an oil supply pressure introduced into the first clutch pressure oil line 52 by controlling the first switching electromagnetic valve 36 so as to control engagement or disengagement of the single clutch.

When the dedicated hybrid transmission is in a serial mode, the clutch does not work, the oil pump 33 works, and operating oil in the oil tank 31 enters an inlet of the oil pump 33 via a first oil line 1 and a filter 32. Operating oil at an outlet of the oil pump 33 enters a right feedback end of the main pressure regulating mechanical valve 34 through a third oil line 3, a fourth oil line 4 and a fifth oil line 5, the operating oil at the outlet of the oil pump 33 enters an inlet of the first switching electromagnetic valve 36 through the third oil line 3 and the fourth oil line 4, the first switching electromagnetic valve 36 is not powered, the first switching electromagnetic valve 36 is located at a right end working position, at the moment, a tenth oil line 10 and a thirteenth oil line 13 are in communication with the oil tank 31, and pressures in the tenth oil line 10 and the thirteenth oil line 13 are 0 bar. The first switchover mechanical valve 38 is made to be located at a left end working position under the spring action of the first switchover mechanical valve 38, at the moment, a sixteenth oil line 16 and the first clutch pressure oil line 52 are in communication with the oil tank 31, a pressure in the first clutch pressure oil line 52 is 0 bar, and the first clutch pressure oil line 52 is in a disconnected state. A pressure at the right feedback end of the main pressure regulating mechanical valve 34 and spring force of the main pressure regulating mechanical valve 34 are balanced, the main pressure regulating mechanical valve 34 is located at the right end working position, the third oil line 3 is in communication with a twelfth oil line 12, and a pressure of operating oil in the third oil line 3, the fourth oil line 4, the fifth oil line 5 and the seventh oil line 7 is maintained at a low pressure value, such as a typical design value of 2.5 bar. In this state, a pressure in the first clutch pressure oil line 52 is 0 bar, the first clutch pressure oil line 52 is disconnected, and the oil pump 33 provides flow for the clutch lubricating oil line 51.

With pressure control of the first clutch pressure oil line 52, when the dedicated hybrid transmission receives a request of entering parallel connection and the first clutch pressure oil line 52 is required to be engaged, the first switching electromagnetic valve 36 is powered, the first switching electromagnetic valve 36 is located at a left end working position, at the moment, the tenth oil line 10 and the thirteenth oil line 13 are in communication with the fourth oil line 4, operating oil at the outlet of the mechanical oil pump 33 enters control ends of the first switchover mechanical valve 38 and the main pressure regulating mechanical valve 34 through the third oil line 3, the fourth oil line 4, the tenth oil line 10 and the thirteenth oil line 13, at the moment, pressures in the thirteenth oil line 13 and the tenth oil line 10 are 2.5 bar, which are greater than spring force of the first switchover mechanical valve 38, the first switchover mechanical valve 38 is located at the right end working position, at the moment, the seventh oil line 7 is in communication with the sixteenth oil line 16, the first clutch pressure oil line 52 communicates, and operating oil starts to enter the first clutch pressure oil line 52. A first damping hole 21 is arranged in the seventh oil line 7 and used for controlling oil charging flow of the first clutch pressure oil line 52, a first energy accumulator 40 is arranged to be in communication with the first clutch pressure oil line 52 through the eighteenth oil line 18 and the sixteenth oil line 16, and pressure impact on the clutch is effectively lowered. At the same time, a pressure at the left control end of the main pressure regulating mechanical valve 34 and spring force of the main pressure regulating mechanical valve 34 are balanced with a pressure at the right feedback end thereof, by setting an acting area of the left control end of the main pressure regulating mechanical valve 34 to be smaller than an acting area of the right feedback end of the main pressure regulating mechanical valve 34, the working position of the main pressure regulating mechanical valve 34 is located at the right position, the third oil line 3 is in communication with the twelfth oil line 12, and a pressure of operating oil in the third oil line 3, the fourth oil line 4, the fifth oil line 5 and the seventh oil line 7 is regulated to be a high pressure value, such as a typical design value of 10 bar. The pressure in the first clutch pressure oil line 52 reaches a target 10 bar after certain time, and the first clutch pressure oil line 52 is engaged. Therefore, the first switching electromagnetic valve 36 is controlled to open and close so as to control the pressure of the operating oil in the third oil line 3, the fourth oil line 4, the fifth oil line 5, the seventh oil line 7 and the first clutch pressure oil line 52. In this state, the pressure in the first clutch pressure oil line 52 is 10 bar, and the first clutch pressure oil line 52 is in an engaged state. The oil pump 33 provides a pressure for the first clutch pressure oil line 52, and provides flow for the clutch lubricating oil line 51.

To sum up, for the system in FIG. 3, when it is determined that the hybrid electric vehicle is in a serial drive mode, the controller controls the oil outlet of the switching electromagnetic valve to be connected to the oil tank, such that the main pressure regulating mechanical valve connects the oil pump to the clutch lubricating oil line, and the switchover mechanical valve connects the clutch pressure oil line to the oil tank, thereby making the oil supply pressure introduced into the clutch pressure oil line be 0 bar, and achieving disengagement of the single clutch.

When it is determined that the hybrid electric vehicle is in a parallel drive mode, the controller controls the oil outlet of the switching electromagnetic valve to be connected to the oil pump, such that the main pressure regulating mechanical valve connects the oil pump to the clutch lubricating oil line, and the switchover mechanical valve connects the clutch pressure oil line to the oil pump, thereby making the oil supply pressure introduced into the clutch pressure oil line be a preset high pressure (10 bar), and achieving engagement of the single clutch.

In the present application, one switching electromagnetic valve is used to control the oil supply pressure of the clutch pressure oil line of one clutch, and two switching electromagnetic valves are used to control the oil supply pressure of the clutch pressure oil lines of two clutches, which can meet the requirements of a one-gear dedicated hybrid transmission and a two-gear dedicated hybrid transmission. Compared to a traditional hydraulic system, at least one electromagnetic valve is omitted, and thus the structure of the hydraulic system is further simplified, and the cost is further lowered.

## Claims

1. A hydraulic control system for a dedicated hybrid transmission, **characterized in** comprising:
a controller;
an oil tank and an oil pump in communication with the oil tank;
a single clutch arranged between a generator and a driving motor of a hybrid electric vehicle, wherein the single clutch has a clutch lubricating oil line and a clutch pressure oil line;
a switching electromagnetic valve, having two oil inlets and one oil outlet, wherein one of the oil inlets of the switching electromagnetic valve is in communication with the oil tank, and the other oil inlet thereof is in communication with the oil pump;
a switchover mechanical valve, having two oil inlets and one oil outlet, wherein one of the oil inlets of the switchover mechanical valve is in communication with the oil tank, the other oil inlet thereof is in communication with the oil pump, and the oil outlet of the switchover mechanical valve is in communication with the clutch pressure oil line; and
a main pressure regulating mechanical valve, having one oil inlet and one oil outlet, wherein the oil inlet of the main pressure regulating mechanical valve is in communication with the oil pump, the oil outlet of the main pressure regulating mechanical valve is in communication with the clutch lubricating oil line, and a feedback end of the main pressure regulating mechanical valve is in communication with the oil pump; wherein
the oil outlet of the switching electromagnetic valve is in communication with both a control end of the switchover mechanical valve and a control end of the main pressure regulating mechanical valve; and
the controller is configured to regulate an oil supply pressure introduced into the clutch pressure oil line by controlling the switching electromagnetic valve so as to control engagement or disengagement of the single clutch.

2. The hydraulic control system for the dedicated hybrid transmission according to claim 1, **characterized in that** the hydraulic control system further comprises:
a main pressure switchover mechanical valve, having two oil inlets and one oil outlet, wherein one of the oil inlets of the main pressure switchover mechanical valve is in communication with the oil tank, and the other oil inlet thereof is in communication with the oil pump; wherein
the oil outlet of the main pressure switchover mechanical valve is in communication with the control end of the main pressure regulating mechanical valve, and a control end of the main pressure switchover mechanical valve is in communication with the oil outlet of the switching electromagnetic valve, so as to achieve indirect communication between the control end of the main pressure regulating mechanical valve and the oil outlet of the switching electromagnetic valve.

3. The hydraulic control system for the dedicated hybrid transmission according to claim 1, **characterized in that** the hydraulic control system further comprises:
an energy accumulator in communication with an oil path between the switchover mechanical valve and the clutch pressure oil line.

4. The hydraulic control system for the dedicated hybrid transmission according to claim 1, **characterized in that**,
a damping hole is arranged on an oil path between the switchover mechanical valve and the oil pump.

5. A hydraulic control system for a dedicated hybrid transmission, **characterized in that** the hydraulic control system comprises:
a controller;
an oil tank and an oil pump in communication with the oil tank;
a dual clutch arranged between a generator and a driving motor of a hybrid electric vehicle, wherein the dual clutch has a clutch lubricating oil line and two clutch pressure oil lines;
two switching electromagnetic valves, wherein each switching electromagnetic valve has two oil inlets and one oil outlet; and one of the oil inlets of each switching electromagnetic valve is in communication with the oil tank, and the other oil inlet thereof is in communication with the oil pump;
two switchover mechanical valves, wherein each switchover mechanical valve has two oil inlets and one oil outlet, one of the oil inlets of each switchover mechanical valve is in communication with the oil tank, the other oil inlet thereof is in communication with the oil pump, and the oil outlet of each switchover mechanical valve is in communication with one of the two clutch pressure oil lines;
a main pressure regulating mechanical valve, having one oil inlet and one oil outlet, wherein the oil inlet of the main pressure regulating mechanical valve is in communication with the oil pump, the oil outlet of the main pressure regulating mechanical valve is in communication with the clutch lubricating oil line, and a feedback end of the main pressure regulating mechanical valve is in communication with the oil pump; and
a main pressure switchover mechanical valve, having two oil inlets, one oil outlet and two control ends, wherein one of the oil inlets of the main pressure switchover mechanical valve is in communication with the oil tank, the other oil inlet thereof is in communication with the oil pump, and the oil outlet of the main pressure switchover mechanical valve is in communication with a control end of the main pressure regulating mechanical valve; wherein
the oil outlet of each switching electromagnetic valve is in communication with a control end of one of the two switchover mechanical valves and is also in communication with one of the two control ends of the main pressure switchover mechanical valve; and
the controller is configured to regulate an oil supply pressure introduced into the clutch pressure oil lines by controlling each switching electromagnetic valve so as to control engagement or disengagement of the dual clutch.

6. The hydraulic control system for the dedicated hybrid transmission according to claim 5, **characterized in that** the hydraulic control system further comprises:
an energy accumulator in communication with an oil path between each switchover mechanical valve and a corresponding clutch pressure oil line.

7. The hydraulic control system for the dedicated hybrid transmission according to claim 5, **characterized in that**,
a damping hole is arranged on an oil path between each switchover mechanical valve and the oil pump.

8. A control method of a hydraulic control system for a dedicated hybrid transmission, applied to the hydraulic control system for the dedicated hybrid transmission according to any one of claims 1 to 4, **characterized in that** the control method comprises:
when it is determined that the hybrid electric vehicle is in a series drive mode, controlling, by the controller, the oil outlet of the switching electromagnetic valve to be connected to the oil tank, such that a main pressure regulating mechanical valve connects the oil pump to the clutch lubricating oil line, and the switchover mechanical valve connects the clutch pressure oil line to the oil tank, thereby making the oil supply pressure introduced into the clutch pressure oil line be 0 bar, and achieving disengagement of the single clutch; and
when it is determined that the hybrid electric vehicle is in a parallel drive mode, controlling, by the controller, the oil outlet of the switching electromagnetic valve to be connected to the oil pump, such that the main pressure regulating mechanical valve connects the oil pump to the clutch lubricating oil line, and the switchover mechanical valve connects the clutch pressure oil line to the oil pump, thereby making the oil supply pressure introduced into the clutch pressure oil line be a preset high pressure, and achieving engagement of the single clutch.

9. A control method of a hydraulic control system for a dedicated hybrid transmission, applied to the hydraulic control system for the dedicated hybrid transmission according to any one of claims 5 to 7, **characterized in that** the control method comprises:
when it is determined that the hybrid electric vehicle is in a series drive mode, controlling, by the controller, the oil outlets of the two switching electromagnetic valves to be connected to the oil tank, such that the main pressure regulating mechanical valve connects the oil pump to the clutch lubricating oil line, and each of the two switchover mechanical valves connects a corresponding clutch pressure oil line to the oil tank, thereby making the oil supply pressure introduced into each clutch pressure oil line be 0 bar, and achieving disengagement of the dual clutch; and
when it is determined that the hybrid electric vehicle is in a parallel drive mode and a target clutch in the dual clutch needs to engage, controlling, by the controller , the oil outlet of the switching electromagnetic valve corresponding to the target clutch to be connected to the oil pump, such that the main pressure regulating mechanical valve connects the oil pump to the clutch lubricating oil line, and the switchover mechanical valve corresponding to the target clutch connects a corresponding clutch pressure oil line to the oil pump, thereby making the oil supply pressure introduced into the clutch pressure oil line corresponding to the target clutch be a preset high pressure, and achieving engagement of the target clutch; and at the same time, further controlling, by the controller, the oil outlet of the switching electromagnetic valve corresponding to the other clutch in the dual clutch to be connected to the oil tank, such that the switchover mechanical valve corresponding to the other clutch connects a corresponding clutch pressure oil line to the oil tank, thereby making the oil supply pressure introduced into the clutch pressure oil line corresponding to the other clutch be 0 bar, and achieving disengagement of the other clutch.

10. A vehicle, **characterized in** comprising the hydraulic control system for the dedicated hybrid transmission according to any one of claims 1 to 4, or comprising the hydraulic control system for the dedicated hybrid transmission according to any one of claims 5 to 7.
